# EUROPÄISCHE PATENTSCHRIFT

(11) **EP 1 028 539 B1**
(45) Veröffentlichungstag und Bekanntmachung des Hinweises auf die Patenterteilung: **24.01.2007**
(21) Anmeldenummer: 00100406.8
(22) Anmeldetag: 08.01.2000
(51) Int. Cl.: H04B 1/66, G10L 19/02

(54) **Verfahren zum Transkodieren eines Audiodatenstroms**
Method for transcoding an audio data stream
Procédé pour le transcodage d'un flux de données audio

(30) Priorität: 12.02.1999 DE 19905868
(43) Veröffentlichungstag der Anmeldung: 16.08.2000
(73) Patentinhaber: ROBERT BOSCH GMBH, 70442 Stuttgart (DE)
(72) Erfinder: Mlasko, Torsten, 30982 Pattensen (DE)

(56) Entgegenhaltungen:
- NAKAJIMA Y ET AL: "MPEG audio bit rate scaling on coded data domain" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12. Mai 1998 (1998-05-12), Seiten 3669-3672, XP010279585 ISBN: 0-7803-4428-6
- PAN D: "A TUTORIAL ON MPEG/AUDIO COMPRESSION" IEEE MULTIMEDIA, IEEE COMPUTER SOCIETY, US, Bd. 2, Nr. 2, 1995, Seiten 60-74, XP000525989 ISSN: 1070-986X

## Beschreibung

### Stand der Technik

Die Erfindung geht aus von einem Verfahren zur Verarbeitung eines Datenstromes rahmenstrukturierter Daten, insbesondere Audiodaten, deren Abtastwerte spektral kodiert sind.

Bei den bei analogen FM-Rundfunk eingesetzten Verfahren zur Datenreduktion wird das analoge Audiosignal digitalisiert und anschließend komprimiert. Beispiele solcher Kompressionsmethoden sind in Vary, Heute, Hess "Digitale Sprachsignalverarbeitung", Teubner Verlag 1998, S. 271 ff, Seite 537 ff aufgeführt.

Bei digitalen Rundfunksystemen wie DAB (Digital Audio Broadcasting) wird eine Kodierung der Audiodaten gemäß dem ETS-Standard 300.401 vorgenommen mit den Ziel, die Datenrate zu reduzieren jedoch eine hohe Qualität beizubehalten. Dieses Verfahren ist eine kompatible Untermenge der MPEG-Standards MPEG-1 (ISO/IEC 11172-3) und MPEG-2 (ISO/IEC 13818-3).

Dekoderseitig werden die komprimierten Audiodaten nach Rahmenbestandteilen zerlegt, dequantisiert und gefiltert sowie ggf. einer Fehlerkorrektur unterzogen.

Der Artikel "MPEG audio bit rate scaling on coded data domain", Nakajima Y et al, ICASSP 1998, offenbart Bitratenskalierung durch Entfernen von Frequenzbändern.

### Vorteile der Erfindung

Mit den Maßnahmen der Erfindung gemäß Anspruch 1 oder Anspruch 14 werden spektralkodierte Daten insbesondere dekoderseitig direkt in einen neuen reduzierten Datenstrom transkodiert, ohne daß eine Dekodierung und eine erneute Enkodierung notwendig ist, wodurch ein erheblicher Rechenaufwand vermieden wird.

Das Verfahren bzw. die Anordnung nach der Erfindung läßt sich in übliche Dekoder insbesondere zur Verarbeitung von Audiosignalen integrieren. Die Daten für den reduzierten Datenstrom fallen bei der ohnehin in einem Dekoder durchzuführenden Rahmenzerlegung an und können direkt für die Generierung des neuen reduzierten Datenstromes verwendet werden. Die Qualität der Wiedergabe der üblichen von einem Dekoder ausgegebenen Daten wird auch bei Aufzeichnung (Speicherung) der Daten des reduzierten Datenstromes nicht beeinträchtigt. Die erfindungsgemäßen Maßnahmen sind auf alle Übertragungsstandards anwendbar, bei denen Audiodaten spektral codiert werden, insbesondere MPEG-Datenströme, Dolby AC3 usw.

Ein weiterer Vorteil der erfindungsgemäßen Maßnahmen ist dadurch gegeben, daß Qualität, insbesondere für die Wiedergabe gespeicherter Daten, und Kompressionsfaktor skalierbar sind.

Die Information kann vom Benutzer zu beliebigen Zeitpunkten abgerufen werden, bzw. in Verbindung mit einer geeigneten Signalisierung in Abwesenheit aufgezeichnet werden.

Das Verfahren nach der Erfindung ist nicht auf eine Signalklasse, wie z.B. Sprache/Musik, beschränkt, sondern für alle Audiosignale verwendbar.

Mit den Maßnahmen des Anspruchs 2 werden nur die niederfrequenten Anteile von Audiodaten in den neuen Datenstrom geschrieben. Dies hat den Vorteil, daß eine hohe Komprimierung erzielt wird und die Qualitätseinbußen nicht sehr gravierend sind, insbesondere bei Sprachsignalen wie Verkehrsmeldungen.

Durch die Maßnahmen des Anspruchs 3 wird der Stereokanal vollständig unterdrückt. Auch dies führt zu einer hohen Komprimierung mit vertretbaren Qualitätseinbußen wie zuvor erwähnt. Die Unterdrückung eines ganzen Kanals ist sehr einfach realisierbar, insbesondere mit einer Ausblendeinrichtung, die beispielsweise von einem abgeleiteten Takt und/oder einem Zeitgeber gesteuert wird.

Mit den Maßnahmen des Anspruchs 4 wird bei Daten für eine Fehlerprüfung nur das Überprüfungsergebnis in den neuen reduzierten Datenstrom geschrieben. Auf diese Weise wird die Zahl der Prüfbits auf ein Bit reduziert.

Wenn das Überprüfungsergebnis gemäß Anspruch 5 bei der Generierung des neuen reduzierten Datenstromes berücksichtigt wird, läßt sich die Fehlerprüfinformation reduzieren bei gleichzeitiger Qualitätsverbesserung der Daten im neuen reduzierten Datenstrom.

Bei einer standardkonformen Generierung des neuen reduzierten Datenstromes gemäß Anspruch 6, läßt sich der neue reduzierte Datenstrom von verfügbaren Standarddekodern dekodieren.

Wenn gemäß Anspruch 7 der neue reduzierte Datenstom mit variabler Bitrate und insbesondere nicht standardgemäß generiert wird, läßt sich eine effizientere Datenreduktion erzielen. In diesem Falle kann eine einfache Signalisierungsinformation mitübertragen werden, wie der neue reduzierte Datenstrom zu dekodieren ist.

Ebenso können wie in Anspruch 8 ausgeführt die Datenrahmen eine variable Länge aufweisen.

Gemäß den Ansprüchen 9 und 10 kann ein Header im neuen Datenstrom vorgesehen werden, der alle Statusinformationen wie verwendete Datenrate, Kodiermode, Abtastrate für einen neu gebildeten Rahmen enthält. Auf diese Weise kann dekoderseitig einfach und schnell ausgewertet werden, wie die Daten zu dekodieren sind. In diesem Header kann gemäß Anspruch 11 auch angegeben werden, welche Tabellen (Dekodiertabellen) und welche Frequenzbänder beim Generieren des reduzierten Datenstromes berücksichtigt wurden.

Zur effizienten Dekodierung ist es, wie in Anspruch 12 aufgezeigt, vorteilhaft in dem für den neuen reduzierten Datenstrom gebildeten Rahmen Datenfelder vorzusehen für eine geordnete Unterbringung der Bit-Zuweisung, der Skalenfaktor-Auswahl, des Skalenfaktoren und der spektralen Abtastwerte für die verschiedenen Frequenzbänder.

Wenn der neue reduzierte Datenstrom in seiner reduzierten Form gemäß Anspruch 13 gespeichert wird, ist der Speicherbedarf durch die Datenreduktion sehr gering. Ein Nutzer kann auf die gespeicherten Daten, z.B. Verkehrsdurchsagen jederzeit zugreifen und sie über seinen Dekoder und Wiedergabesystem hörbar machen. Die Datenreduktion ist mit einer Verminderung der Audioqualität verbunden, wobei der Kompressionsfaktor und damit die Qualität einstellbar sind.

### Zeichnungen

Anhand der Zeichnungen werden Ausführungsbeispiele der Erfindung erläutert.

Es zeigen:
- Figur 1 ein Blockschaltbild eines MPEG-Enkoders,
- Figur 2 die Rahmenstruktur eines MPEG-Rahmens,
- Figur 3 ein Blockschaltbild eines Audiodekoders mit erfindungsgemäßen Zusatzeinrichtungen,
- Figur 4 die Rahmenstruktur für einen erfindungsgemäß reduzierten Datenstrom.

### Beschreibung von Ausführungsbeispielen

Bevor die erfindungsgemäße Verarbeitung des Datenstromes rahmenstrukturierter Daten erläutert wird, wird zum besseren Verständnis zuvor der Aufbau eines MPEG-1 Layer II-Enkoders dargestellt sowie die Rahmenstruktur eines MPEG-1 Layer II-Rahmens.

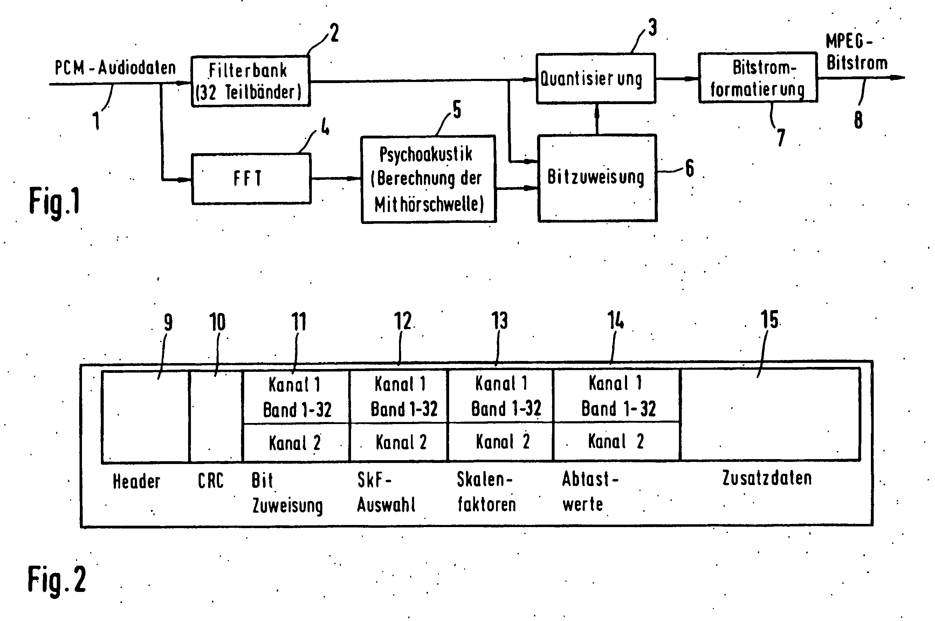

Wie im Blockschaltbild des MPEG-1 Layer II-Enkoders gemäß Figur 1 dargestellt, werden PCM-Audiodaten durch eine Filterbank 2 spektral zerlegt. Die 32 Frequenzbänder sind äquidistant angeordnet. Die Abtastwerte der einzelnen Frequenzbänder werden skaliert und quantisiert (3) . Die Wortbreite, mit der die Abtastwerte quantisiert werden, ist variabel und wird durch das psychoakustische Modell bestimmt, vgl. hierzu beispielsweise ISO/IEC 13818-3, Annex D. Die PCM-Audiodaten 1 werden zur Steuerung der Quantisierung 3 einer Fast-Fourier- Transformation 4 und der psychoakustischen Modellfunktion 5 (Berechnung der Mithörschwelle) unterzogen. Mit dem Ausgangssignal der Filterbank 2 und der psychoakustischen Modellfunktion 5 wird die Bitzuweisung 6 vorgenommen, die die Quantisierung 3 steuert. Abschließend wird der Bitstrom einer Bitstromformatierung 7 zum Erhalt eines MPEG-Bitstromes 8 zugeleitet.

Figur 2 zeigt die Struktur eines MPEG-1 Layer II-Rahmens. Die Breite der einzelnen Elemente steht nicht im Zusammenhang mit der tatsächlichen Bitrate der Elemente. Der Header 9 beinhaltet Informationen über Datenrate, Kodiermode und Abtastrate. Das Datenfeld 10 (CRC) dient zur Fehlererkennung. Die Datenfelder Bitzuweisung 11, Skalenfaktor-Auswahl 12 und Skalenfaktoren 13 werden zusammen als Seiteninformation bezeichnet. Diese Seiteninformation ist für alle belegten Frequenzbänder und für alle Kanäle vorhanden. Der überwiegende Anteil der Daten entfällt auf die Abtastwerte 14 in den einzelnen Frequenzbändern. Das Zusatzdatenfeld 15 enthält beliebige Daten und wird gemäß ETS 300 401 bei DAB zu einer zusätzlichen Fehlererkennung der Skalenfaktoren verwendet.

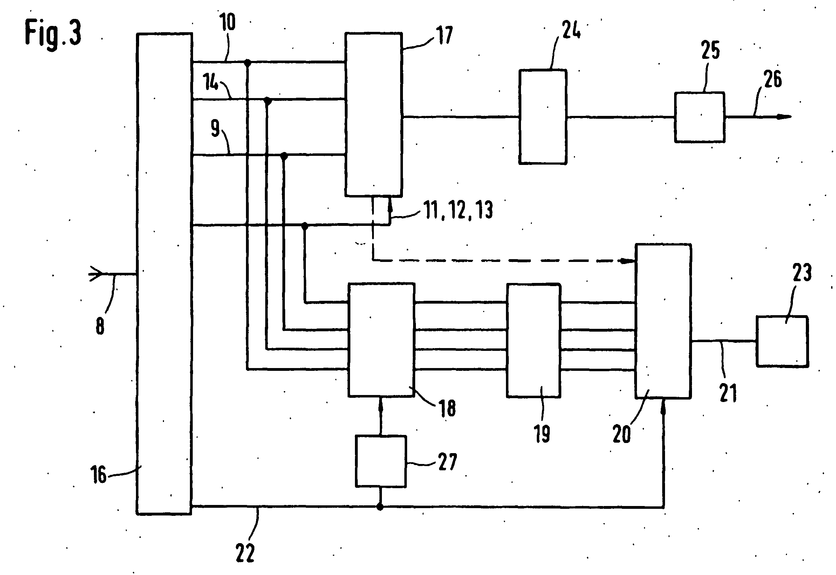

In Figur 3 ist das Blockschaltbild eines Audiodekoders dargestellt. Der Bitstrom 8 wird vom Demultiplexer 16, der die Rahmenzerlegung vornimmt, in die einzelnen Bestandteile gemäß Figur 2 zerlegt. Bei diesem Vorgang wird ein Teil der Information sofort in den neuen, reduzierten Datenstrom geschrieben (transkodiert). Dabei werden nur die Bestandteile des MPEG-Rahmens gemäß Figur 2 berücksichtigt, die dem ersten Kanal (Monokanal) und dort den unteren Frequenzbändern (Band M-N) bzw. den niederfrequenten Anteilen zugeordnet sind. Der Stereokanal wird vollständig unterdrückt. Eine weitere Datenreduktion ist dadurch möglich, daß das Ergebnis der CRC-Überprüfung 17 in den reduzierten Datenstrom kodiert wird, womit nur ein Bit (Check ok/nicht ok) erforderlich ist anstatt z.B. 16 Bit. Bei DAB werden sogar 48 Bit für insgesamt fünf CRC verwendet, so daß dort sogar 43 Bit eingespart werden können. Optional kann das Ergebnis der CRC-Überprüfung bei der Generierung des reduzierten Datenstroms (gestrichelte Wirkungslinie in Figur 3) berücksichtigt werden, womit bei DAB auch die fünf Bit noch eingespart werden.

Zur Ausblendung/Unterdrückung erster Rahmenbestandteile wie Stereo-Kanal (Kanal 2 in Figur 2), Fehlerschutzbits im Datenfeld 10 ist eine Ausblendeinrichtung 18 vorgesehen. Daran schließt sich die Abtrenneinrichtung 19 an, um nur einen Teil der Information zweiter Rahmenbestandteile, d.h. die N-M unteren Frequenzbänder, abzutrennen. Schließlich ist ein Multiplexer 20 vorgesehen, der aus den derart reduzierten Rahmenbestandteilen der neuen reduzierten Datenstrom 21 generiert. Zur Steuerung der Ausblendeinrichtung 18 wie auch des Multiplexers 20 wird der durch den Demultiplexer 16 wiedergewonnene Rahmentakt 22 verwendet. In die Taktzuführung zur Ausblendeinrichtung 18 ist noch ein Zeitglied 27 geschaltet, welches dafür sorgt, daß die auszublendenden Signale genau zu den richtigen Zeiten unterdrückt werden.

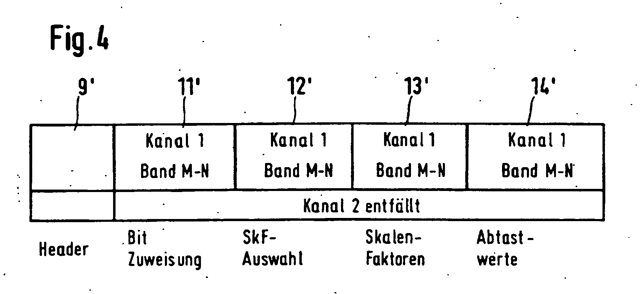

Die den in Figur 2 entsprechenden Daten sind in Figur 4 mit gestrichenen Bezugszeichen dargestellt. Im Header 9 können Statusinformationen wie verwendete Datenrate, Kodiermode, Abtastrate untergebracht werden.

Der reduzierte Datenstrom kann standardkonform generiert werden, so daß jeder Standarddekoder diesen Datenstrom direkt dekodieren kann. In diesem Fall sind die Header-Felder 9, dargestellt in Figur 2 und die in Figur 4 dargestellten Header-Felder 9' identisch aber nicht zwangsläufig deren Inhalte. Dabei wird für den reduzierten Datenstrom in jedem Fall der Einkanalmode (Mono) signalisiert.

Die effizientere Methode ist allerdings, einen nichtkonformen Datenstrom mit variabler Bitrate zu generieren. In diesem Falle reicht z.B. ein 6 Bit Header 9' aus. In diesem Header kann z.B. signalisiert werden, welche Tabellen zum Dekodieren des reduzierten Datenstroms benötigt werden und wie viele Frequenzbänder beim Generieren des reduzierten Datenstroms berücksichtigt wurden.

Der Rahmen für den neuen reduzierten Datenstrom kann ebenso mit einer variablen Länge versehen werden.

Der neue reduzierte Datenstrom 21 kann in seiner reduzierten Form mittels eines Speichers 23 abgespeichert werden. Ein Nutzer kann auf Daten wie Verkehrsdurchsagen jederzeit zugreifen und sie über seinen Dekoder und Wiedergabesystem hörbar machen. Bei Abwesenheit des Nutzers oder in den Fällen wo der Nutzer gerade keine Wiedergabe wünscht, kann mit entsprechender Signalisierung eine Aufzeichnung erfolgen.

Der in Figur 3 dargestellte Audiodekoder weist neben dem Demultiplexer 16, der Fehlerüberprüfungseinrichtung 17 und der erfindungsgemäßen Zusatzeinrichtungen 18, 19, 20, 23 eine Dequantisierung 24 auf, die von den Signalen 11, 12, 13 gesteuert wird, und eine inverse Filterbank 25 für die 32 Teilbänder. Die PCM-Audiodaten 26 sind am Ausgang der inversen Filterbank 25 zur Weiterleitung an die üblichen Wiedergabeeinrichtungen verfügbar.

Die erfindungsgemäßen Zusatzeinrichtungen können natürlich ganz oder teilweise in einen herkömmlichen Audiodekoder-Chip mitintegriert werden.

## Patentansprüche

1. Verfahren zur Verarbeitung eines Datenstromes (8) rahmenstrukturierter Audiodaten, deren Abtastwerte spektral kodiert sind, wobei insbesondere dekoderseitig folgende Schritte ausgeführt werden:
- der Datenstrom (8) wird in seine Rahmenbestandteile zerlegt (16),
- zur Bildung eines neuen reduzierten insbesondere ebenfalls rahmenstrukturierten Datenstromes (21) werden ursprüngliche erste Rahmenbestandteile vollständig unterdrückt (18) und zweite Rahmenbestandteile nur bezüglich eines Teils ihrer Frequenzbänder (19) direkt in den neuen Datenstrom geschrieben.

2. Verfahren nach Anspruch 1 **dadurch gekennzeichnet, daß** bei den zweiten Rahmenbestandteilen spektralkodierte niederfrequente Anteile von Audiodaten in den neuen Datenstrom (21) geschrieben werden.

3. Verfahren nach Anspruch 1 oder 2, **dadurch gekennzeichnet, daß** bei Audiodaten mit einem Stereokanal nur der Monokanal bezüglich eines Teils seiner Information in den neuen Datenstrom geschrieben wird und der Stereokanal vollständig unterdrückt wird.

4. Verfahren nach einem der Ansprüche 1 bis 3, **dadurch gekennzeichnet, daß** Daten für eine Fehlerprüfung (10) nur bezüglich des Überprüfungsergebnisses in den neuen reduzierten Datenstrom (21) geschrieben werden.

5. Verfahren nach Anspruch 4, **dadurch gekennzeichnet, daß** das Überprüfungsergebnis bei der Generierung des neuen reduzierten Datenstromes (21) berücksichtigt wird.

6. Verfahren nach einem der Ansprüche 1 bis 5, **dadurch gekennzeichnet, daß** der neue reduzierte Datenstrom (21) standardkonform generiert wird und insbesondere mit einem Standarddekoder dekodierbar ist.

7. Verfahren nach einem der Ansprüche 1 bis 5, **dadurch gekennzeichnet, daß** der neue reduzierte Datenstrom (21) mit variabler Bitrate und insbesondere nicht standardkonform generiert wird und daß eine Signalisierungsinformation mitübertragen wird, wie dieser Datenstrom zu dekodieren ist.

8. Verfahren nach einem der Ansprüche 1 bis 7, **dadurch gekennzeichnet, daß** die Rahmen für den neuen reduzierten Datenstrom (21) mit einer variablen Länge versehen werden.

9. Verfahren nach einem der Ansprüche 1 bis 8, **dadurch gekennzeichnet, daß** im neuen reduzierten Datenstrom (21) ein Header (9') vorgesehen wird, der Statusinformationen für einen neu gebildeten Rahmen enthält.

10. Verfahren nach Anspruch 9, **dadurch gekennzeichnet, daß** im Header (9') als Statusinformationen Informationen über die verwendete Datenrate, den Kodiermode und die Abtastrate untergebracht werden.

11. Verfahren nach Anspruch 9 oder 10, **dadurch gekennzeichnet, daß** im Header (9') Informationen untergebracht werden, die angeben, welche Tabellen zum Dekodieren des reduzierten Datenstromes (21) benötigt werden und welche Frequenzbänder beim Generieren des reduzierten Datenstromes (21) berücksichtigt wurden.

12. Verfahren nach einem der Ansprüche 1 bis 11, **dadurch gekennzeichnet, daß** der für den neuen reduzierten Datenstrom (21) gebildete Rahmen Datenfelder für eine Bit-Zuweisung (11'), eine Skalenfaktor-Auswahl (12'), Skalenfaktoren (13') und spektrale Abtastwerte (14') jeweils für verschiedene Frequenzbänder enthält.

13. Verfahren nach einem der Ansprüche 1 bis 12, **dadurch gekennzeichnet, daß** der neue reduzierte Datenstrom (21) in seiner reduzierten Form gespeichert (23) wird.

14. Anordnung, insbesondere Dekoder, für die Verarbeitung eines Datenstromes rahmenstrukturierter Audiodaten, deren Abtastwerte spektral kodiert sind, mit folgenden Merkmalen:
- Mittel (16) zur Zerlegung des Datenstromes (8) in seine Rahmenbestandteile,
- Mittel (20) zur Generierung eines neuen reduzierten Datenstromes (21), wobei eine Ausblendeinrichtung (18) für erste Rahmenbestandteile und eine Abtrenneinrichtung (19) für einen Teil der Frequenzbänder zweiter Rahmenbestandteile vorgesehen ist.

15. Anordnung nach Anspruch 14, **dadurch gekennzeichnet, daß** den Mitteln (20) zur Generierung des neuen Datenstromes (21) eine Speichereinrichtung (23) zugeordnet ist.

16. Verwendung des Verfahrens nach einem der Ansprüche 1 bis 13 oder der Anordnung nach Anspruch 14 oder 15 für einen Übertragungsstandard mit spektralkodierten Audiodaten, wie MPEG-1, MPEG-2, MPEG-4 oder Dolby AC3.

17. Verwendung des Verfahrens nach einem der Ansprüche 1 bis 13 oder der Anordnung nach Anspruch 14 oder 15 zur Speicherung von Verkehrsdurchsagen bei digitalen Rundfunksystemen, wie z.B. DAB.

## Claims

1. Method for processing a data stream (8) of frame-structured audio data whose samples are spectrally encoded, where the decoder end, in particular, performs the following steps:
- the data stream (8) is split into its frame constituents (16),
- a new reduced, in particular likewise frame-structured, data stream (21) is formed by rejecting (18) original first frame constituents completely and writing only some of the frequency bands (19) of second frame constituents directly into the new data stream.

2. Method according to Claim 1, **characterized in that** in the case of the second frame constituents, spectrally encoded low-frequency components of audio data are written into the new data stream (21).

3. Method according to Claim 1 or 2, **characterized in that** in the case of audio data with a stereo channel, only the mono channel has some of its information written into the new data stream and the stereo channel is rejected completely.

4. Method according to one of Claims 1 to 3, **characterized in that** data for an error check (10) are written into the new reduced data stream (21) only for the result of the check.

5. Method according to Claim 4, **characterized in that** the result of the check is taken into account when generating the new reduced data stream (21).

6. Method according to one of Claims 1 to 5, **characterized in that** the new reduced data stream (21) is generated according to standard and, in particular, can be decoded using a standard decoder.

7. Method according to one of Claims 1 to 5, **characterized in that** the new reduced data stream (21) is generated with a variable bit rate and, in particular, not according to standard, and **in that** a signalling information item is also transmitted indicating how this data stream is to be decoded.

8. Method according to one of Claims 1 to 7, **characterized in that** the frames for the new reduced data stream (21) are provided with a variable length.

9. Method according to one of Claims 1 to 8, **characterized in that** the new reduced data stream (21) is provided with a header (9') which contains status information for a newly formed frame.

10. Method according to Claim 9, **characterized in that** the header (9') accommodates, as status information, information about the data rate used, the encoding mode and the sampling rate.

11. Method according to Claim 9 or 10, **characterized in that** the header (9') accommodates information indicating which tables are required for decoding the reduced data stream (21) and which frequency bands are taken into account when generating the reduced data stream (21).

12. Method according to one of Claims 1 to 11, **characterized in that** the frame formed for the new reduced data stream (21) contains data fields for bit allocation (11'), scale-factor selection (12'), scale factors (13') and spectral samples (14') for respective different frequency bands.

13. Method according to one of Claims 1 to 12, **characterized in that** the new reduced data stream (21) is stored (23) in its reduced form.

14. Arrangement, particularly a decoder, for processing a data stream of frame-structured audio data whose samples are spectrally encoded, having the following features:
- means (16) for splitting the data stream (8) into its frame constituents,
- means (20) for generating a new reduced data stream (21), where a masking device (18) is provided for first frame constituents and a separating device (19) is provided for some of the frequency bands of second frame constituents.

15. Arrangement according to Claim 14, **characterized in that** the means (20) for generating the new data stream (21) have an associated memory device (23).

16. Use of the method according to one of Claims 1 to 13 or of the arrangement according to Claim 14 or 15 for a transmission standard using spectrally encoded audio data, such as MPEG-1, MPEG-2, MPEG-4 or Dolby AC3.

17. Use of the method according to one of Claims 1 to 13 or of the arrangement according to Claim 14 or 15 for storing traffic announcements in digital broadcast radio systems, such as DAB.

## Revendications

1. Procédé de traitement d'un flux de données (8) de données audio à cadre structuré dont les valeurs de balayage sont codées de façon spectrale, selon lequel on exécute en particulier côté décodeur, les étapes suivantes :
- le flux de données (8) est décomposé (16) en ses composantes cadres, et
- pour former un nouveau flux de données (21) réduit, en particulier également à cadre structuré, on supprime complètement les premiers composantes de cadre initiaux et on inscrit les deuxièmes composantes de cadre uniquement concernant une partie de leurs bandes de fréquence (19) directement dans le nouveau flux de données.

2. Procédé selon la revendication 1,
**caractérisé en ce que**
pour les deuxièmes composantes de cadre, on inscrit dans le nouveau flux de données des parties de données audio basse fréquence à codage spectral.

3. Procédé selon la revendication 1 ou 2,
**caractérisé en ce que**
pour les données audio avec un canal stéréo, on n'inscrit dans le nouveau flux de données que le monocanal concernant une partie de son information et on supprime complètement le canal stéréo.

4. Procédé selon l'une quelconque des revendications 1 à 3,
**caractérisé en ce qu'**
on n'inscrit dans le nouveau flux de données réduit (21) que les données pour une vérification d'erreur (10) concernant le résultat de la vérification.

5. Procédé selon la revendication 4,
**caractérisé en ce que**
le résultat de la vérification est pris en compte lors de la génération du nouveau flux de données réduit (21).

6. Procédé selon l'une quelconque des revendications 1 à 5,
**caractérisé en ce que**
le nouveau flux de données réduit (21) est généré de manière conforme à la norme et peut en particulier être décodé à l'aide d'un décodeur standard.

7. Procédé selon l'une quelconque des revendications 1 à 5,
**caractérisé en ce que**
le nouveau flux de données réduit (21) est généré avec un débit de bits variable et en particulier non conforme à la norme, et une information de signalisation est également transmise comment ce flux de données doit être décodé.

8. Procédé selon l'une quelconque des revendications 1 à 7,
**caractérisé en ce que**
les cadres pour le nouveau flux de données réduit (21) sont munis d'une longueur variable.

9. Procédé selon l'une quelconque des revendications 1 à 8,
**caractérisé en ce qu'**
un en-tête (9') qui contient des informations d'état pour un nouveau cadre est prévu dans le nouveau flux de données réduit (21).

10. Procédé selon la revendication 9,
**caractérisé en ce que**
l'en-tête (9') contient comme informations d'état des informations concernant le débit de données utilisé, le mode de codage et le débit de balayage.

11. Procédé selon la revendication 9 ou 10,
**caractérisé en ce que**
l'en-tête (9') contient des informations qui indiquent quels tableaux sont nécessaires pour décoder le flux de données réduit (21) et quelles bandes de fréquence ont été prises en compte lors de la génération du flux de données réduit (21).

12. Procédé selon l'une quelconque des revendications 1 à 11,
**caractérisé en ce que**
le cadre formé pour le nouveau flux de données réduit (21) comprend des champs de données pour une affectation de bits (11'), une sélection de facteur d'échelle (12'), des facteurs d'échelle (13') et des valeurs de balayage spectrales (14') respectivement pour différentes bandes de fréquence.

13. Procédé selon l'une quelconque des revendications 1 à 12,
**caractérisé en ce que**
le nouveau flux de données réduit (21) est stocké (23) sous sa nouvelle forme réduite.

14. Dispositif, en particulier décodeur, pour le traitement d'un flux de données audio à cadre structuré dont les valeurs de balayage sont codées de façon spectrale, comprenant les caractéristiques suivantes :
- des moyens (16) pour décomposer le flux de données (8) en ses composantes de cadre, et
- des moyens (20) pour générer un nouveau flux de données réduit (21), comprenant un dispositif de suppression (18) pour des premières composantes de cadre et un dispositif de séparation (19) pour une partie des bandes de fréquence de deuxièmes composantes de cadre.

15. Dispositif selon la revendication 14,
**caractérisé en ce qu'**
un dispositif de mémoire (23) est associé aux moyens (20) de génération du nouveau flux de données (21).

16. Utilisation du procédé selon l'une des revendications 1 à 13, ou du dispositif selon la revendication 14 ou 15, pour un standard de transmission avec des données audio à codage spectral, tel que MPEG-1, MPEG-2, MPEG-4 ou Dolby AC3.

17. Utilisation du procédé selon l'une des revendications 1 à 13, ou du dispositif selon la revendication 14 ou 15, pour mémoriser des messages concernant la circulation sur les systèmes de radiodiffusion numériques tels que par exemple DAB.
